# EUROPEAN PATENT APPLICATION

(11) **EP 3 722 270 A1**
(43) Date of publication of application: **14.10.2020**
(21) Application number: 20168980.9
(22) Date of filing: 09.04.2020
(51) Int. Cl.: C04B 33/14, C04B 33/24

(54) **PORCELAIN MIXTURE FOR MANUFACTURING SYNTHETIC STONE FOR MAKING TABLEWARE AND A TABLEWARE PRODUCT MADE OF THIS MIXTURE**

(30) Priority: 11.04.2019 CZ 20193612
(71) Applicant: G.Benedikt Karlovy Vary s.r.o., 36006 Karlovy Vary (CZ)
(72) Inventor: KA PAR, Petr, 36005 Karlovy Vary (CZ); JANÁK, Pavel, 58231 Okrouhlice (CZ)
(74) Representative: Langrova, Irena

(57) **Abstract**

Porcelain mixture contains base porcelain granulate of a defined chemical composition and at least one pigment and/or at least one kind of colouring porcelain granulate of a defined chemical composition different from the chemical composition of the base porcelain granulate. The purpose is to provide a difference between the colour shades of bisque-fired base porcelain granulate and bisque-fired pigment and/or bisque-fired porcelain granulates. Colouring porcelain granulate contains at least one pigment.

The mixture may contain at least two kinds of colouring porcelain granulates where the chemical composition of the first colouring porcelain granulate differs from the chemical composition of the second colouring porcelain granulate in order to provide a difference between the colour shades of the bisque-fired colouring porcelain granulates.

## Description

### Field of the Invention

The proposed invention relates to porcelain mixtures for making tableware, namely plates, bowls, mugs, cups, saucers and similar products.

### Background Art

Thanks to its favourable properties, porcelain has a long history of being used for making tableware, which includes plates, bowls, mugs, cups, saucers and similar items. To outline these properties specifically, this material is sanitary, wear resistant, accumulates (maintains) heat and does not absorb moisture. Industrial manufacture of such porcelain products typically involves press-forming of porcelain granulate which exhibits certain humidity and size distribution. Porcelain granulate is made of liquid (diluted) porcelain slurry (known as "slip") using a hot air stream in a spray drier. After the porcelain granulate is compacted by pressing into a semi-finished product, the product is bisque-fired and coated, most often by glazing.

A typical porcelain mixture consists of SiO₂, Al₂O₃, TiO₂ Fe₂O₃, CaO, MgO, K₂O and Na₂O. The desired properties of porcelain and the finished bisque-fired product are achieved when the mixture has a defined known chemical composition (ratios of constituents). The colour of the bisque is one of such properties.

Tableware is usually made of white porcelain. However, the demand is growing for tableware in other colours and with other patterns, particularly those which resemble stone. One way to produce these is to apply a colour pattern to the product during the manufacture. To this end, decoration techniques (such as printing) as well as colouring glazes of single or multiple colours can be used. The principal disadvantage of these solutions is that the body is not coloured through thickness. Therefore, the coloured surface may eventually wear off or chip away. In the damaged locations, the white porcelain will be visible. From the production viewpoint, the application of a colour pattern onto the surface usually results in additional costs and is more demanding in terms of production than the manufacture of plain white glaze. Besides, the resulting surface only resembles natural stone to a limited extent.

Another way to manufacture other than white porcelain involves the use of a porcelain mixture which provides the desired colour after bisque-firing. Special coloured porcelain mixtures of this kind are made by mixing the above constituents at appropriate ratios or by adding other constituents. The resulting uniform mixture is atomized and dried using a conventional procedure and used for making uniform homogeneously-coloured porcelain granulate. The pressed and bisque-fired product from this porcelain granulate has the desired non-white colour which, however, is uniform. This method is advantageous in its simple use in production (virtually identical to making ordinary white porcelain) and provides a body which is coloured through thickness. On the other hand, this may be less desirable for some customers because the product is of single colour, as in the previous case, although non-white. This solution is not suitable for granular stone-like appearance.

In summary, the disadvantages of the state of the art with respect to tableware with stone-like appearance include poor resemblance and low durability of the surface decoration layer. The invention proposed herein is to provide a material which eliminates these disadvantages.

### Disclosure of Invention

This invention relates to a composition of a porcelain mixture for making granular synthetic stone whose properties are particulary suitable for tableware. The mixture consists of a base porcelain granulate with a defined known chemical composition. The base porcelain granulate may be white or coloured, as follows from the above-described state of the art. It means that it may or may not contain pigments. The pigment is a substance which is contained in porcelain granulate and has other than white colour after bisque-firing. The general rule is that for a substance to operate as a pigment in porcelain granulate, its amount must be sufficient to be visible after bisque-firing to provide the technical effect of altering the colour of the bisque. The pigment may come from the group comprising oxides, carbonites, chlorides, sulfides, spinels and chromanes. This pigment may contain an element from among the following: iron (Fe), chromium (Cr), manganese (Mn), copper (Cu), selenium (Se), aluminium (Al), cobalt (Co), zinc (Zn), zirconium (Zr), vanadium (V), nickel (Ni), titanium (Ti), uranium (U), praseodymium (Pr), silver (Ag), gold (Au), silicon (Si), tin (Sn), antimony (Sb) and calcium (Ca). Typical pigments include Fe₂O₃, Cr₂O₃, MnO₂, MnCO₃, CuO, CoO and other substances.

The mixture may also contain at least one kind of colouring porcelain granulate of a defined known chemical composition. The chemical composition of the colouring porcelain granulate (or colouring porcelain granulates) differs from the chemical composition of the base porcelain granulate. The purpose is to obtain different colour shades between the bisque-fired porcelain granulates. The colouring porcelain granulate contains at least one pigment which differs from the pigment in the base porcelain granulate or which is contained in a different amount.

In addition to or instead of the colouring porcelain granulate, at least one pigment may be added to the base porcelain granulate to provide different colour shades between the bisque-fired base porcelain granulate and the bisque-fired pigment. In other words, the pigment may supplement or substitute the colouring porcelain granulate. Where the colouring porcelain granulate is substituted with a pigment, the products may exhibit fine colour tones with visible base porcelain granules because the pigment is unable to substantially colour the base porcelain granulate. Where a pigment is used in addition to the colouring porcelain granulate, a product with multiple colours may be obtained.

In order to obtain bisque-fired porcelain with desired properties, it is advantageous for the base porcelain granulate and said at least one kind of colouring porcelain granulate to have nearly identical bisque-firing temperatures. Otherwise one of the porcelain granulates may become overfired or underfired. This would impair the properties of the product.

Depending on the required colours of the product, the mixture may contain at least two different kinds of colouring porcelain granulates. In such case, the chemical composition of the first colouring porcelain granulate differs from the chemical composition of the second colouring porcelain granulate. The purpose is to obtain different colour shades between the bisque-fired colouring porcelain granulates. The difference in the chemical compositions may be achieved by pigment in the first colouring porcelain granulate being other than the pigment contained in the second colouring porcelain granulate or by its content in a different amount. The difference between the colour of the colouring porcelain granulate and the base porcelain granulate may therefore be achieved by different contents and/or types of pigments or by content of different numbers of pigments. A single kind of colouring porcelain granulate may contain one or more different pigments. In other words, different colours in the individual kinds of porcelain granulates may be obtained by contents of pigments of the same kind at different ratios in the individual kinds of porcelain granulates or by contents of different pigments in the individual kinds of porcelain granulates. The total content of pigments in the colouring porcelain granulate is preferably between 0.1 % and 20 % by weight.

Where the same pigment is used in both base and colouring porcelain granulates, the difference in colours may be achieved by content of the pigment in the colouring porcelain granulate being at least twice as high as in the base porcelain granulate. For obtaining a greater difference between the resulting colours, it is advantageous when the content of the pigment in the colouring porcelain granulate is at least ten times as high as in the base porcelain granulate, whereas the content being at least twenty times larger is advantageous. At higher content, the pigment produces a more intensive colour. High content of Fe₂O₃ leads to a dark (brown to black) colour of bisque-fired porcelain.

Depending on the requirement for the amount or depth of colour (the relative proportions of bright and dark grains in the product), the total content of (one or more kinds of) colouring porcelain granulate in the base porcelain granulate may range from 1 % to 99 % by weight. To obtain deeper colours, the optimal range for said content is 15 % to 85 % by weight. This provides an appreciable amount of coloured granules in the base (bright-coloured) granulate and the desired granular (inhomogenous) appearance. A similar, though less attractive, colour pattern is obtained by adding a pigment directly to the base porcelain granulate.

A related embodiment is a tableware product from said porcelain mixture.

### Best Mode for Carrying Out the Invention

A porcelain mixture for making synthetic stone for tableware contains base porcelain granulate of defined known chemical composition (after annealing): 63.9 wt. % SiO₂, 0.1wt.% TiO₂ 28.9 wt. % Al₂O₃, 0.2wt.% Fe₂O₃, 0.9wt.% CaO, 0.5wt.% MgO, 3.9 wt. % K₂O and 1.6 wt. % Na₂O. After bisque-firing, the base porcelain granulate of this chemical composition is substantially white.

The mixture also contains one kind of colouring porcelain granulate of a defined chemical composition (after annealing): 61 wt. % SiO₂, 0.1 wt. % TiO₂ 27.4 wt. % Al₂O₃, 5 wt. % Fe₂O₃, 0.8 wt. % CaO, 0.7 wt. % MgO, 3.5 wt. % K₂O and 1.5 wt. % Na₂O. The chemical composition of the colouring porcelain granulate differs from that of the base porcelain granulate to ensure that they have different colour tones after bisque-firing. The bisque-firing temperature of the base porcelain granulate is between 1200 and 1240 °C and the bisque-firing temperature of the colouring porcelain granulate is between 1200 and 1220 °C. This means that the bisque-firing temperatures are practically identical. In this case, the pigment in the colouring porcelain granulate is iron oxide (Fe₂O₃). The content of Fe₂O₃ in the colouring porcelain granulate is 25 times higher than that of Fe₂O₃ in the base porcelain granulate. This quantity provides a notable difference to the colour of the base porcelain granulate because the colouring porcelain granulate is essentially black when bisque-fired. In this case, the content of the colouring porcelain granulate in the base porcelain granulate is 15 % by weight. The colouring porcelain granulate is dispersed throughout the volume of the base porcelain granulate.

Said mixture of the porcelain granulates was converted by a known pressing process into a tableware product in the form of a plate. Thanks to the composition of the porcelain mixture, the material of the product is a faithful mimic of fine-grained granite. Granules of the colouring porcelain granulate are dispersed throughout the volume of the base porcelain granulate. Pressing and bisque-firing causes individual granules to join but their interiors do not mix. In the product, they are clearly visible and distinguishable, just like in natural grainy rock, such as granite.

Since the resulting material is still an ordinary porcelain, it retains all the key properties relevant to its use with food: the bisque is sanitary, wear resistant and does not absorb moisture. The product may be coated with glaze but it is not necessary for obtaining the desired properties.

## Claims

1. Porcelain mixture for manufacturing synthetic stone for making tableware which contains base porcelain granulate of a defined chemical composition **characterized in that** it further contains at least one pigment and/or at least one kind of colouring porcelain granulate of a defined chemical composition different from the chemical composition of the base porcelain granulate in order to provide a difference between the colour shades of bisque-fired base porcelain granulate and bisque-fired pigment and/or bisque-fired porcelain granulates, where said at least one kind of colouring porcelain granulate contains at least one pigment.

2. The porcelain mixture according to claim 1 **characterized in that** it contains at least two kinds of colouring porcelain granulates where the chemical composition of the first colouring porcelain granulate differs from the chemical composition of the second colouring porcelain granulate in order to provide a difference between the colour shades of the bisque-fired colouring porcelain granulates.

3. The porcelain mixture according to claim 1 or 2 **characterized in that** the total content of pigments in the colouring porcelain granulate is between 0.1 % and 20 % by weight.

4. The porcelain mixture according to any of the preceding claims **characterized in that** the content of the pigment in the colouring porcelain granulate is at least twice as high as the content of the same pigment in the base porcelain granulate.

5. The porcelain mixture according to any of the preceding claims **characterized in that** the content of the pigment in the colouring porcelain granulate is at least ten times as high as the content of the same pigment in the base porcelain granulate.

6. The porcelain mixture according to any of the preceding claims **characterized in that** the content of the pigment in the colouring porcelain granulate is at least twenty times as high as the content of the same pigment in the base porcelain granulate.

7. The porcelain mixture according to any of the preceding claims **characterized in that** the pigment belongs to a group comprising oxides, carbonites, chlorides, sulfides, spinels and chromanes.

8. The porcelain mixture according to claim 7 **characterized in that** the pigment contains an element which belongs to a group comprising iron (Fe), chromium (Cr), manganese (Mn), copper (Cu), selenium (Se), aluminium (Al), cobalt (Co), zinc (Zn), zirconium (Zr), vanadium (V), nickel (Ni), titanium (Ti), uranium (U), praseodymium (Pr), silver (Ag), gold (Au), silicon (Si), tin (Sn), antimony (Sb) and calcium (Ca).

9. The porcelain mixture according to any of the preceding claims **characterized in that** the total content of colouring porcelain granulates in the base porcelain granulate is between 1 % and 99 % by weight.

10. The porcelain mixture according any of the preceding claims **characterized in that** the total content of colouring porcelain granulates in the base porcelain granulate is between 15 % and 85 % by weight.

11. A tableware product **characterized in that** it is made of a porcelain mixture according to any of the preceding claims.
